# EUROPEAN PATENT SPECIFICATION

(11) **EP 3 510 353 B1**
(45) Date of publication and mention of the grant of the patent: **11.03.2026**
(21) Application number: 17767895.0
(22) Date of filing: 07.09.2017
(51) Int. Cl.: G01B 21/04, G05B 19/401

(54) **MEASUREMENT METHOD**
MESSVERFAHREN
PROCÉDÉ DE MESURE

(30) Priority: 09.09.2016 GB 201615307
(43) Date of publication of application: 17.07.2019
(73) Proprietor: Renishaw PLC, Wotton-under-Edge, Gloucestershire GL12 8JR (GB)
(72) Inventor: MCMURTRY, David Roberts, Wotton-under-Edge Gloucestershire GL12 8JR (GB); OULD, John Charles, Wotton-under-Edge Gloucestershire GL12 8JR (GB)
(74) Representative: Dunn, Paul Edward
(86) International application number: PCT/GB2017/052611
(87) International publication number: WO 2018/046923

(56) References cited:
- US-A1- 2010 018 069
- US-A1- 2010 050 837
- US-A1- 2015 377 617

## Description

The present invention relates to a method of measuring an object.

In particular, the present invention relates to a technique that comprises imparting identifiable motions to the scan path traversed by a scanning probe to introduce time stamps that allow an object to be measured by analysis of the probe data alone.

Machine tools for manufacturing workpieces are known. It is also known that a measurement probe can be mounted in the spindle of such a machine tool to allow certain features of a workpiece to be measured using the machine tool. Such measurements may be used to establish the location of the workpiece and/or dimensions of cutting tools prior to a machining process. Measurements may also be performed to inspect a machined workpiece to verify a cutting operation has been performed correctly.

One known way to measure a workpiece using a machine tool is to use a spindle mounted scanning probe that comprises a deflectable stylus and one or more transducers for measuring stylus deflection in a local (probe) coordinate system. The stylus deflection measurements acquired by such a scanning probe are typically termed "probe data" and the measured position of the scanning probe within the coordinate system of the machine tool is typically termed "machine position data". In use, the scanning probe is moved along a certain scan path relative to the object. The machine position data generated as the scan path is traversed are combined with the corresponding probe data to establish the position of points on the surface of the object (see US 2010/0018069 A1, for instance).

Various techniques have been devised previously for combining probe data with corresponding machine position data. For example, US7970488 describes how a timing (synchronisation) signal received by both the machine tool and scanning probe system can be used to ensure the probe data and machine position data are temporally aligned before they are combined. A technique for precisely measuring the system delay between probe and machine measurements has also been described in US7866056. The process of combining probe data and machine position data is, for a variety of reasons, not easy to implement in practice on most machine tool systems. For example, difficulties can arise even if the machine tool does include an external data link (e.g. a RS-232, file polling or software connection) for transferring information to an external processing system. In particular, such a data link can often be difficult to configure and typical machine tool data links are relatively slow which negatively impacts on cycle times. The provision of a slow machine tool data link is a particular problem when transferring the very large amounts of machine position data that are typically generated during a scanning process.

A number of methods have also been used previously which avoid the need for the machine position data altogether. US7523561 describes how probe data can be combined with assumed machine position data instead of using the actual machine position data output from the machine tool. It has been found that, in certain situations, these techniques can be susceptible to variations in the probe data sets that are collected for different measurements. For example, changes in the feed rate or the time at which the scanning probe is activated can introduce errors when trying to compare a series of measurements.

US2015/0377617 and US2010/0050837 describe measuring objects using a scanning probe mounted to a machine tool. Machine position data and scanning probe data are combined to provide the surface position measurements.

The present invention thus attempts to obviate at least some of the above mentioned disadvantages by providing a way of encoding timing and/or position information into the acquired probe data itself.

According to a first aspect, the present invention provides a method for measuring an object using a machine tool apparatus comprising a scanning probe as defined in claim 1.

The method of the present invention thus employs a scan path for a scanning probe that has been configured to include a segment or section that can be analysed to measure the object. The scan path also includes a plurality of identifiable probe motions which act as markers or time stamps. These time stamps allow, for example, the start and end or other points of the relevant section of the scan path to be identified from the probe data alone. **In** other words, each identifiable probe motion occurs at a known time during traversal of the scan path thereby acting as a timing stamp. This can also be thought of as identifying certain commanded or nominal positions within the scan path.

An advantage of including a plurality of such time stamps within the probe data itself is that it removes the need to also extract machine position data from the machine tool. The beginning and end of the first scan segment can, for example, be found from the probe data alone, even if the feed rate of the machine tool has been changed or if the probe starts acquiring probe data at a variable point in time before the scan segment is scanned. As explained below, the time stamps allow multiple sets of separately collected probe data (e.g. measurements of a plurality of nominally identical objects) to be compared to one another. It also allows the combination of probe data with machine position data not collected during that particular scanning procedure. **In** particular, probe data could be combined with assumed (nominal) machine position data. This enables the speed of measurements (e.g. for part set-up) to be increased thereby decreasing cycle times.

The identifiable probe motions may occur at any suitable point in the scan path. They may occur before the first scan path segment, after the first scan path segment or even during the first scan path segment. Conveniently, the scan path is arranged to impart identifiable probe motions before and after the first scan path segment. The plurality of identifiable probe motions may allow any two points of the first san path segment to be identified. Advantageously, a start and an end of the first scan path segment may be identified.

The identifiable probe motions may be incorporated into the scan path in a variety of ways. The only requirement is that each of the plurality of identifiable probe motions results in the generation of probe data having a characteristic of some type that is different to that expected during traversal of the rest of the scan path. The plurality of identifiable probe motions may be similar or identical to each other, or the scan path may include different identifiable probe motions. Advantageously, at least one of the plurality of identifiable probe motions comprises a dwell period in which scanning probe motion relative to the object is halted. The scanning probe may thus be held substantially stationary relative to the object for a short duration of time. If a gradual variation in probe data is expected for the scan path, a dwell alone could be identified from the probe data.

At least one of the plurality of identifiable probe motions may comprise altering the distance between the scanning probe and the object. Advantageously, at least one of the plurality of identifiable probe motions may comprise reducing and then increasing the distance between the scanning probe and the object. For example, the identifiable probe motion could involve the scanning probe being stepped towards and then away from the object to impart an identifiable change or "dink" in the probe data.

If the scanning probe comprises a contact probe having a deflectable stylus for contacting the object, then at least one of the plurality of identifiable probe motions may thus comprise increasing and then reducing the stylus deflection. The reversal in motion (i.e. the transition between moving the scanning probe towards and away from the surface to increase and then decrease the stylus deflection) provides a well-defined time stamp. Such a reversal in motion preferably occurs shortly after the stylus is brought into contact with the surface of the object or shortly before it is moved out of contact with the surface. The "dink" will then occur after or before the stylus deflection is below a minimum deflection level that indicates the stylus is not in contact with the surface. This helps such dinks to be identified. It is also possible for an identifiable probe motion to comprise increasing the stylus deflection to exceed the stylus deflection expected during traversal of the rest of the scan path. The increased stylus deflection can then be recognised from the probe data. The scan path may optionally cause the stylus to move off the surface prior to any such stylus deflection increase to allow it to be identified more readily.

The method may comprise the step of identifying the plurality of identifiable probe motions in the acquired probe data. For example, the position of a peak in the data that corresponds to the identifiable probe motion may be determined. The method comprises the step of using the identifiable probe motions to synchronise the acquired probe data with a separately collected data set.

In a first alternative (a) defined in claim 1, the separately collected data set comprises probe data separately acquired by a machine tool driving a scanning probe along the scan path. For example, the method may comprise comparing the acquired probe data with similar probe data that was previously collected when scanning an object using the same scan path. This probe data may have been collected when a different object (e.g. nominally identical to the object being measured) was placed on the same machine tool and scanned using the same scan path. Alternatively, the probe data may have been collected using the same scan path on a different machine tool.

In a second alternative (b) defined in claim 1, the separately collected data comprises machine position data that describes the position of the scanning probe as it traverses the scan path, the machine position data being nominal, commanded or assumed machine position data that is generated using knowledge of the scan path with which the machine tool is programmed. The identifiable probe motions again allow synchronisation of the acquired probe data with the separately acquired machine position data.

The scanning probe preferably captures probe data at a predetermined capture rate. The scanning probe may also be arranged to output a continual stream of probe data. This stream of probe data may be passed from the scanning probe to an external processor (e.g. computer) via a probe interface. The collected probe data may comprise a discrete set of data points collected between the machine tool issuing instructions to the scanning probe to start collecting probe data and to stop collecting probe data. In other words, the probe data may comprise a discrete set of data points collected between start scanning (probe enable-on) and stop scanning (probe enable-off) instructions that are issued by the machine tool to the scanning probe. Appropriate start and stop signals may thus be issued to the scanning probe by the machine tool at suitable points in the scan path.

The method may be implemented using any scanning probe. The scanning probe may be a non-contact (e.g. optical, capacitive, inductive) scanning probe. The scanning probe may be a contact scanning probe. In particular, a contact scanning probe may be provided that has a deflectable stylus. The stylus may be deflectable relative to the housing of the scanning probe in any one of two mutually perpendicular directions or in any of three mutually perpendicular directions. At least one transducer may be provided within the scanning probe for measuring the amount of deflection of the stylus. The scanning probe may include a sensor that can only measure the magnitude (not direction) of stylus deflection; i.e. the scanning probe may comprise a multidirectional, single output scanning probe. For example, the scanning probe may comprise a TC76-Digilog or a TC64-Digilog scanning probe as manufactured by Blum Novotest GmbH, Germany or a model G25 probe sold by Marposs, Italy. The scanning probe may comprise sensors that can measure both the magnitude and direction of any stylus deflection. For example, the analogue measurement probe may generate three output signals that relate to the deflection of the stylus tip in three mutually orthogonal directions. The SPRINT (OSP-60) probing system manufactured by Renishaw plc, Wotton-Under-Edge, UK is an example of such a scanning probe.

It should be noted for completeness that scanning probes as described herein (which can sometimes also be called analogue probes) are different to so-called touch trigger probes. Touch trigger probes, which are sometimes termed digital or switching type probes, simply act as a switch. Deflection of the probe stylus from a rest position (e.g. when the stylus tip is moved into contact with the surface of an object) causes a trigger signal to be issued that is fed to a "SKIP" (or equivalent) input of the machine tool. The machine tool measures the position of the touch trigger probe in the machine coordinate system (x,y,z) at the instant the trigger signal is issued, thereby allowing (with suitable calibration) the position of a single point on the surface of the object to be measured. A touch trigger probe is thus repeatedly driven into, and out of, contact with the surface of an object to take point-by-point position measurements of an object. Touch trigger probes are thus different to scanning probes in that they do not allow the collection of probe data whilst being scanned along a path on the surface of a workpiece. The method of the present invention is applicable only to scanning (not touch trigger) measurements.

The first scan path segment may produce probe data that can provide a measure of any property of the object. For example, the first scan path segment may produce probe data that can be used for part set-up or for measuring a feature or features of the object. The first scan path segment conveniently produces probe data that is analysed to determine a dimension of the object. Advantageously, the first scan path segment produces probe data that is analysed to determine a location and/or orientation of the object. The location and/or orientation of the object is preferably determined prior to a cutting operation performed by the machine tool and the measurement may be used to set one or more cutting parameters.

The scan path may comprise only the first scan path segment. Advantageously, the scan path comprises a plurality of further scan path segments that each produce probe data that can be analysed to measure a property of the object. The scan path is preferably arranged to impart identifiable probe motions before and after each further scan path segment to allow a start and an end of each further scan path segment to be identified from the probe data alone. **In** other words, time stamps may be applied at the beginning and end of each of a plurality of scan path segments.

The method may be used to measure any object. Advantageously, the object comprises a component of a consumer electronics device.

Also described herein, but not claimed as such, is a method for measuring an object using a machine tool comprising a scanning probe, the method comprising the step of driving the scanning probe along a scan path relative to the object, the scanning probe being arranged to acquire probe data which describes a series of positions on the surface of the object relative to the measurement probe as the scan path is traversed, wherein the scan path is configured to impart at least one identifiable probe motion that can be identified from the probe data alone, wherein each identifiable probe motion occurs at a known time during traversal of the scan path thereby acting as a time stamp such that analysis of the probe data alone can be used to determine a property of the object. The scan path may be selected so as to impart a plurality of identifiable probe motions (e.g. at the beginning and end of a region of the scan path) that can be identified from the probe data alone. The method may also comprise any one or more of the features described above.

While not claimed as such, a method is also described herein for measuring an object using a machine tool comprising a scanning probe. The method may comprise the step of driving the scanning probe along a scan path relative to the object. The scanning probe is preferably arranged to acquire probe data which describes a series of positions on the surface of the object relative to the measurement probe as the scan path is traversed. Advantageously, the scan path is configured to impart a plurality of identifiable probe motions that can be identified from the probe data alone. For example, the scan path may comprise at least a first scan path segment which may be analysed to measure the object. A first identifiable probe motion may be provided in the scan path. This first identifiable probe motion may be prior to the first scan path segment. A second identifiable probe motion may be provided in the scan path. This second identifiable probe motion may be after the first scan path segment. A start and end of the section of the scan path can then be identified from the probe data alone. The method may also comprise any one or more of the features described above.

While not claimed as such, a method is also described for measuring a workpiece using a machine tool apparatus comprising a scanning probe, the method comprising driving the scanning probe along a scan path relative to the workpiece whilst the scanning probe acquires probe data describing a series of positions on the surface of the workpiece relative to the scanning probe, the scan path producing probe data that can be analysed to measure the workpiece, wherein the scan path is arranged to impart a plurality of identifiable probe motions to the scanning probe that can be identified from the probe data alone. **In** this example, the workpiece may be a workpiece in a series of nominally identical workpieces. It should also be noted that the term workpiece in this context does not include a probe qualification artefact or the like. The method may also comprise any one or more of the features described above.

The invention will now be described, by way of example only, with reference to the accompanying drawings in which;
Figure 1 illustrates a machine tool carrying a spindle mounted scanning probe,
Figure 2 illustrates a scan path along which a scanning probe is driven by a machine tool,
Figure 3 shows a scan path incorporating identifiable probe motions that define time stamps,
Figure 4 shows the probe data collected between the points 80a and 80b of the scan shown in figure 3,
Figure 5 shows two sets of probe data collected by moving a scanning probe along the same scan path at different feed rates,
Figure 6 shows how the data of figure 5 can be scaled for comparison purposes using the time stamps, and
Figure 7 shows the difference between the probe data of figure 6.

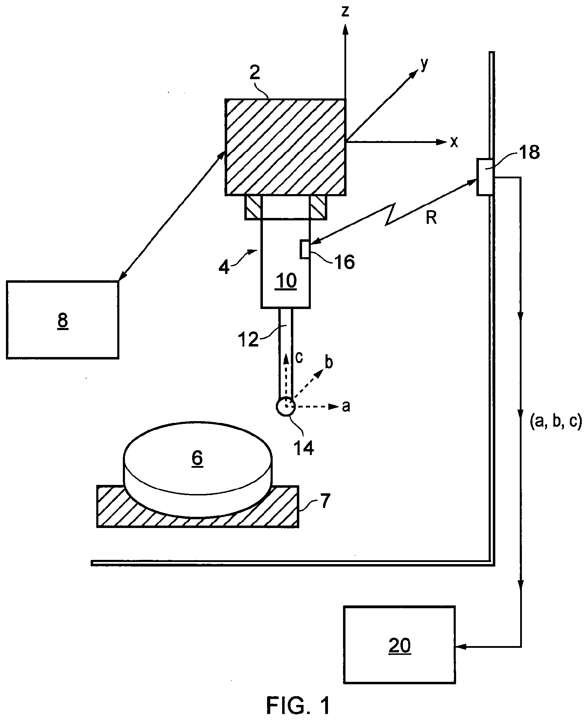

Referring to figure 1, a machine tool is schematically illustrated having a spindle 2 holding a scanning probe 4.

The machine tool comprises motors (not shown) for moving the spindle 2 relative to a workpiece 6 located on a workpiece holder 7 within the work area of the machine tool. The location of the spindle within the work area of the machine is accurately measured in a known manner using encoders or the like; such measurements provide spindle position data (herein termed "machine position data") that is defined in the machine co-ordinate system (x,y,z). A computer numerical controller (CNC) 8 of the machine tool controls movement of the spindle 2 within the work area of the machine tool and also receives the machine position data describing spindle position (x,y,z).

The scanning probe 4 comprises a probe body or housing 10 that is attached to the spindle 2 of the machine tool using a standard releasable tool shank connection. The probe 4 also comprises a workpiece contacting stylus 12 that protrudes from the housing. A ruby stylus ball 14 is provided at the tip of the stylus 12 for contacting the associated workpiece 6. The stylus tip can deflect relative to the probe housing 10 and a transducer system within the probe body 10 measures deflection of the stylus in a local or probe coordinate system (a,b,c). The stylus deflection data acquired by the scanning probe is herein termed "probe data". The probe 4 also comprises a transmitter/receiver portion 16 that communicates with a corresponding receiver/transmitter portion of a remote probe interface 18. In this manner, probe data (i.e. a,b,c data values) from the scanning probe 4 are transmitted over a wireless communications link to the interface 18. A general purpose computer 20 is also provided to receive the probe data from the probe interface 18. The scanning probe 4 and interface 18 of the present example may comprise a SPRINT measurement probe system as manufactured by Renishaw plc, Wotton-Under-Edge, Glos., UK.

In use, the CNC 8 runs a so-called part program that contains a series of command codes that cause the scanning probe to be moved or driven along a certain path in space. Such a driven path is often termed a tool path, although because a scanning probe rather than a cutting tool is being carried it can also be termed a scan path. Probe data (i.e. a, b, c data values describing stylus deflection) and machine position data (i.e. x, y, z values describing the position of the scanning probe in the machine coordinate system) are acquired as the scanning probe driven along the scan path. Probe data is typically collected at a pre-set rate (e.g. a stylus deflection reading may be taken every millisecond). The CNC 8 can also be programmed to move around the scan path at a certain feed rate. The feed rate is typically a variable that can be adjusted by the user to control the speed at which the spindle is moved around in space according to the instructions of the part program. For example, feed rate can be defined using a parameter that is set in the part program (e.g. the command F1000 may be used to set the feed-rate for subsequent interpolated moves to 1000 mm/minute). Machine tools also tends to have a feed-rate override control that is used during program prove-out; this is typically a knob allowing an operator to slow down all moves to a percentage of their programmed value.

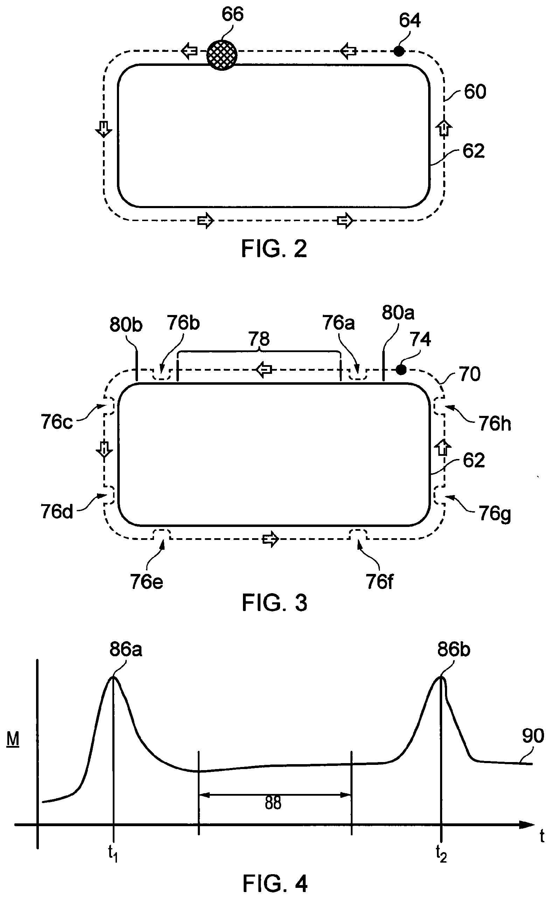

Figure 2 shown an example of a prior art scan path 60 for measuring a rectangular object 62. The scan path starts and ends at a point 64 and defines the motion of the probe body 66 around the object 62. **In** this example, the scan path 60 is offset slightly from the surface of the object 62 so that the stylus (not shown) of the scanning probe remains in contact with the surface of the object as the scan path is traversed. The scanning probe is instructed to start collecting probe data at the point 64 and to stop collecting probe data when it has returned to that point. There will be further segments of the scan path to move the probe into and out of contact with the surface, but these are not shown in figure 2.

**In** prior art systems, probe data (e.g. a,b,c stylus deflection values) are collected by the scanning probe system whilst machine position data (e.g. x,y,z position values) are collected by the machine tool that is moving the scanning probe. Each piece of collected probe data is combined with machine position data acquired at the same point in time in order to derive a series of measured points on the surface of the object. These measured points are found in the machine coordinate system. As described in US7970488, the two data sets are synchronised to a common clock thereby allowing them to be combined. However, combining such sets of data is time consuming and might not be possible for certain types of machine tool. This is especially the case for part set-up applications, where the location and/or orientation of a workpiece (including a blank) within the machine tool coordinate system needs to be established as a quickly as possible so that machining operations can occur as quickly as possible.

As explained above, the technique described in US7523561 allows measurements to be performed by combining collected probe data with assumed machine position data. The assumed position data describes the commanded position of the measurement probe, rather than using actual probe data measured by the machine tool. Although such a technique can be used for many types of measurement, it has been found to be difficult to compare collected sets of probe data if aspects of the machine tool configuration are adjusted. For example, the rate at which probe data is collected is typically fixed. If the feed rate of the machine tool is adjusted but the probe data collection rate is unchanged, then the amount of probe data collected when traversing the same scan path will vary. There can also be different feed rates for different commanded moves within a part program, and only some of these commanded moves may be changed by altering the interpolated feed rate parameter. Accelerations and decelerations as the probe approaches the object may also introduce variations between data sets. This makes robust comparisons of data sets difficult to implement in practice.

The present inventors have thus devised a method in which time stamps are encoded in the probe data itself. In particular, the scan path that defines the motion of the scanning probe relative to the object being measured is arranged to include characteristic movements (e.g. "dinks") that can be used as time stamps. These characteristic movements allow the start and end of certain segments of the scan path to be identified from the probe data alone. Embedding timing information in the probe data removes issues when comparing probe data sets that can arise from changes to the feed rate or the time at which the scanning probe starts outputting data.

Figure 3 is an example of a scan path 70 for a rectangular object 62 that includes multiple time stamps. The scan path 70 starts and ends at a point 74. The scan path 70 follows the same general path as the scan path 60 of figure 2, except that it includes multiple characteristic moves 76a-76h (collectively termed characteristic moves 76) that cause the scanning probe to be briefly moved inwardly towards the surface (i.e. increasing the magnitude of stylus deflection). The characteristic moves 76 are arranged to lie outside of the regions that are to be measured so that they do not impact on measurement accuracy. In this example, the characteristic moves 76 are located at the start and end of each side of the rectangular object 62.

The scanning probe is thus driven around the scan path 70 from the start to the end point 74 whilst probe data is collected at a set rate. The scanning probe initially moves along the scan path in a straight line until it reaches the region where it makes the first characteristic move 76a (i.e. a move toward the surface and back out again). The scanning probe then continues to move along a straight line until reaching the second characteristic move 76b. A first scan path segment 78 is thus provided which is preceded by a first timing stamp (i.e. characteristic move 76a) and followed by a second timing stamp (i.e. characteristic move 76b). After being driven around the corner of the object, a similar procedure is performed on the second, third and fourth faces of the object in turn.

Referring to figure 4, the magnitude (M) of stylus deflection as measured by the scanning probe is plotted as a function of time. In particular, figure 4 shows the resultant deflection (i.e. the magnitude of the resultant of the measured a, b, c deflections) between the points 80a and 80b shown in figure 3. It can be seen that the first and second characteristic moves 76a and 76b result in first and second peaks 86a and 86b in the deflection data. These occur at times t1 and t2. Knowing the times t1 and t2 allows the set of probe data 88 collected from the first scan path segment 78 to be determined. This probe data alone may be analysed to determine a workpiece offset or rotation.

The presence of the time stamps in the probe data has a number of advantages. In particular, as described below, it allows comparison of collected probe data with other data sets.

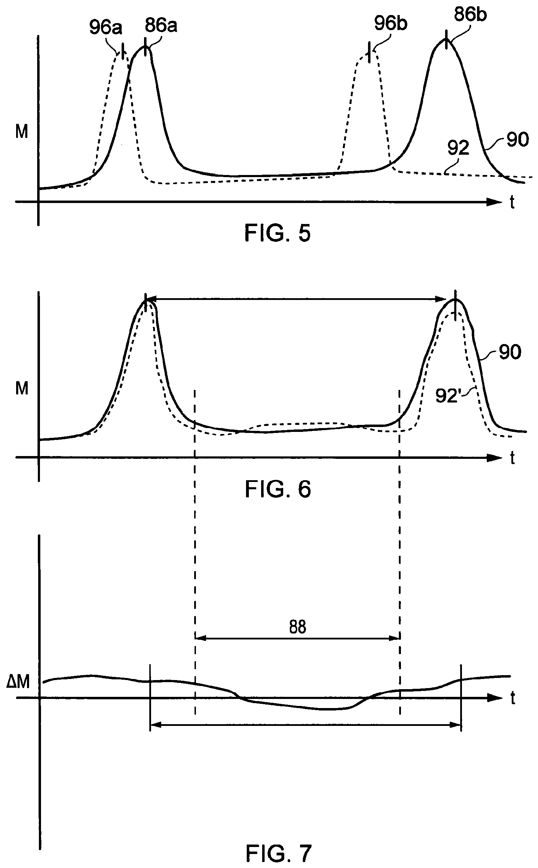

Figure 5 shows the data 90 of figure 4 plotted against a similar set of data 92 that was collected for a nominally identical rectangular object using the same scan path and scanning probe. The two sets of data were collected using slightly different feed rates which led to the variation in the positions of the first and second peaks 86a and 86b in the deflection data 90 and the first and second peaks 96a and 96b in the deflection data 92.

Referring to figure 6, the timing stamps (i.e. the pair of peaks in the two data sets) allow a comparison of the data sets to be performed without also needing to know the machine position data associated with the probe data. For example, the data 92 can be scaled and offset to generate data 92' in which the timing stamps are aligned with those of the other data 90.

Referring to figure 7, a comparison of the two data sets can then be made by analysing the difference in probe data 88 collected from the first scan path segment 78. This allows any variation in the dimension or position of the two objects along the first scan path segment 78 to be assessed.

It should be remembered that the above embodiments are examples of the present invention. Although the analysis of probe data from a single side of the object is described above, it should be note that the three other segments of the scan path could be analysed in the same way. The measurements from a scan path segment may be analysed alone, or variations in multiple segments may be analysed together (e.g. to establish an offset in the centre position of the object). The technique can also be applied to objects of different shape and to different scan paths. The skilled person would be aware of many variations and alternatives that would be possible in accordance with the present invention.

## Claims

1. A method for measuring an object (6; 62) using a machine tool apparatus comprising a scanning probe (4), the method comprising driving the scanning probe along a scan path (70) relative to the object (6; 62) whilst the scanning probe (4) acquires probe data describing a series of positions on the surface of the object (6; 62) relative to the scanning probe (4), the scan path (70) comprising at least a first scan path segment (78) for producing probe data that can be analysed to measure the object (6; 62),
wherein the scan path (70) is also arranged to impart a plurality of identifiable probe motions (76) to the scanning probe that can be identified from the acquired probe data (90,92) alone, each identifiable probe motion (76) generating probe data having a characteristic that is different to that expected during traversal of the rest of the scan path and occurring at a known time during traversal of the scan path, each identifiable probe motion (76) thereby defining a time stamp, wherein the method comprises a step of using the plurality of identifiable probe motions (76) to synchronise the acquired probe data with a separately collected data set, **characterised in that** the separately collected data set comprises either:
(a) probe data separately acquired by a machine tool driving a scanning probe along the scan path (70), or
(b) machine position data that describes the position of the scanning probe as it traverses the scan path (70), the machine position data being nominal, commanded or assumed machine position data that is generated using knowledge of the scan path with which the machine tool is programmed.

2. A method according to claim 1, wherein the scan path (70) is arranged to impart identifiable probe motions (76a, 76b) before and after the first scan path segment (78).

3. A method according to any preceding claim, wherein the plurality of identifiable probe motions (76) allow a start and an end of the first scan path segment (78) to be identified.

4. A method according to any preceding claim, wherein at least one of the plurality of identifiable probe motions (76) comprises reducing and then increasing the distance between the scanning probe (4) and the object (6; 62).

5. A method according to claim **4,** wherein the scanning probe (4) comprises a contact probe having a deflectable stylus (12) for contacting the object (6; 62) and at least one of the plurality of identifiable probe motions (76) comprises increasing and then decreasing the stylus deflection.

6. A method according to any preceding claim, wherein at least one of the plurality of identifiable probe motions (76) comprises a dwell period in which scanning probe motion relative to the object (6; 62) is halted.

7. A method according to any preceding claim, wherein the scanning probe (4) captures probe data at a predetermined capture rate and the feed rate of the machine tool apparatus can be varied by a machine tool operator.

8. A method according to any preceding claim, wherein the scanning probe (4) comprises a contact probe having a deflectable stylus for contacting the object.

9. A method according to any preceding claim, wherein the first scan path segment (78) produces probe data that is analysed to determine a dimension of the object, a location of the object and/or an orientation of the object.

10. A method according to any preceding claim, wherein scan path (70) comprises a plurality of further scan path segments that each produce probe data that can be analysed to measure a property of the object, wherein the scan path (70) is arranged to impart identifiable probe motions before and after each further scan path segment to allow a start and an end of each further scan path segment to be identified from the probe data alone.

11. A method according to any preceding claim, wherein the object (6; 62) comprises a component of a consumer electronics device.

## Patentansprüche

1. Verfahren zum Messen eines Objekts (6; 62) unter Verwendung einer Werkzeugmaschinenvorrichtung, die eine Abtastsonde (4) umfasst, wobei das Verfahren das Antreiben der Abtastsonde entlang eines Abtastwegs (70) relativ zu dem Objekt (6; 62) umfasst, während die Abtastsonde (4) Sondendaten erfasst, die eine Reihe von Positionen auf der Oberfläche des Objekts (6; 62) relativ zu der Abtastsonde (4) beschreiben, wobei der Abtastweg (70) mindestens ein erstes Abtastwegsegment (78) zum Erzeugen von Sondendaten umfasst, die analysiert werden können, um das Objekt (6; 62) zu messen,
wobei der Abtastweg (70) auch angeordnet ist, um der Abtastsonde eine Vielzahl von identifizierbaren Sondenbewegungen (76) zu verleihen, die allein aus den erfassten Sondendaten (90, 92) identifiziert werden können, wobei jede identifizierbare Sondenbewegung (76) Sondendaten erzeugt, die eine Eigenschaft aufweisen, die sich von der unterscheidet, die während des Durchquerens des Rests des Abtastwegs erwartet wird, und zu einem bekannten Zeitpunkt während des Durchquerens des Abtastwegs auftritt, wobei jede identifizierbare Sondenbewegung (76) dadurch einen Zeitstempel definiert, wobei das Verfahren einen Schritt des Verwendens der Vielzahl von identifizierbaren Sondenbewegungen (76) umfasst, um die erfassten Sondendaten mit einem separat gesammelten Datensatz zu synchronisieren, **dadurch gekennzeichnet, dass** der separat gesammelte Datensatz entweder umfasst:
(a) Sondendaten, die separat durch eine Werkzeugmaschine erfasst werden, die eine Abtastsonde entlang des Abtastwegs (70) antreibt, oder
(b) Maschinenpositionsdaten, die die Position der Abtastsonde beschreiben, während sie den Abtastweg (70) durchquert, wobei die Maschinenpositionsdaten nominelle, befohlene oder angenommene Maschinenpositionsdaten sind, die unter Verwendung der Kenntnis des Abtastwegs erzeugt werden, mit dem die Werkzeugmaschine programmiert ist.

2. Verfahren nach Anspruch 1, wobei der Abtastweg (70) angeordnet ist, um identifizierbare Sondenbewegungen (76a, 76b) vor und nach dem ersten Abtastwegsegment (78) zu verleihen.

3. Verfahren nach einem der vorhergehenden Ansprüche, wobei die Vielzahl von identifizierbaren Sondenbewegungen (76) ermöglicht, dass ein Anfang und ein Ende des ersten Abtastwegsegments (78) identifiziert werden kann.

4. Verfahren nach einem der vorhergehenden Ansprüche, wobei mindestens eine der Vielzahl von identifizierbaren Sondenbewegungen (76) das Verringern und dann Vergrößern des Abstands zwischen der Abtastsonde (4) und dem Objekt (6; 62) umfasst.

5. Verfahren nach Anspruch 4, wobei die Abtastsonde (4) eine Kontaktsonde mit einem ablenkbaren Taststift (12) zum Kontaktieren des Objekts (6; 62) umfasst und mindestens eine der Vielzahl von identifizierbaren Sondenbewegungen (76) das Vergrößern und dann Verringern der Taststiftablenkung umfasst.

6. Verfahren nach einem der vorhergehenden Ansprüche, wobei mindestens eine der Vielzahl von identifizierbaren Sondenbewegungen (76) eine Verweildauer umfasst, in der die Abtastsondenbewegung relativ zu dem Objekt (6; 62) angehalten wird.

7. Verfahren nach einem der vorhergehenden Ansprüche, wobei die Abtastsonde (4) Sondendaten mit einer vorbestimmten Erfassungsrate erfasst und die Vorschubrate der Werkzeugmaschinenvorrichtung durch einen Werkzeugmaschinenbediener variiert werden kann.

8. Verfahren nach einem der vorhergehenden Ansprüche, wobei die Abtastsonde (4) eine Kontaktsonde mit einem ablenkbaren Taststift zum Kontaktieren des Objekts umfasst.

9. Verfahren nach einem der vorhergehenden Ansprüche, wobei das erste Abtastwegsegment (78) Sondendaten erzeugt, die analysiert werden, um eine Abmessung des Objekts, einen Ort des Objekts und/oder eine Ausrichtung des Objekts zu bestimmen.

10. Verfahren nach einem der vorhergehenden Ansprüche, wobei der Abtastweg (70) eine Vielzahl von weiteren Abtastwegsegmenten umfasst, die jeweils Sondendaten erzeugen,
die analysiert werden können, um eine Eigenschaft des Objekts zu messen, wobei der Abtastweg (70) angeordnet ist, um identifizierbare Sondenbewegungen vor und nach jedem weiteren Abtastwegsegment zu verleihen, um zu ermöglichen, dass ein Anfang und ein Ende jedes weiteren Abtastwegsegments allein aus den Sondendaten identifiziert werden.

11. Verfahren nach einem der vorhergehenden Ansprüche, wobei das Objekt (6; 62) eine Komponente einer Unterhaltungselektronikvorrichtung umfasst.

## Revendications

1. Un procédé de mesure d'un objet (6 ; 62) à l'aide d'un appareil de machine-outil comprenant un palpeur de scanning (4), le procédé comprenant l'entraînement du palpeur de scanning le long d'une trajectoire de scan (70) par rapport à l'objet (6 ; 62) tandis que le palpeur de scan (4) acquiert des données de palpeur décrivant une série de positions sur la surface de l'objet (6 ; 62) par rapport au palpeur de scanning (4), la trajectoire de scan (70) comprenant au moins un premier segment de trajectoire de scan (78) pour produire des données de palpage qui peuvent être analysées pour mesurer l'objet (6 ; 62),
dans lequel la trajectoire de scan (70) est également agencée pour conférer une pluralité de mouvements de palpage identifiables (76) au palpeur de scanning qui peut être identifiée à partir des seules données de palpage acquises (90, 92), chaque mouvement de palpage identifiable (76) générant des données de palpage ayant une caractéristique différente de celle attendue pendant le parcours du reste de la trajectoire de scan et se produisant à un moment connu pendant le parcours de la trajectoire de scan, chaque mouvement de palpage identifiable (76) définissant ainsi un horodatage, dans lequel le procédé comprend une étape d'utilisation de la pluralité de mouvements de palpage identifiables (76) pour synchroniser les données de palpage acquises avec un ensemble de données collectées séparément, **caractérisé en ce que** l'ensemble de données collectées séparément comprend soit :
(a) des données de palpage acquises séparément par une machine-outil entraînant un palpeur de scanning le long de la trajectoire de scan (70), ou
(b) des données de position de la machine qui décrivent la position du palpeur de scanning lorsqu'il parcourt la trajectoire de scan (70), les données de position de la machine étant des données de position de machine nominales, commandées ou supposées qui sont générées en utilisant la connaissance de la trajectoire de scan avec laquelle la machine-outil est programmée.

2. Un procédé selon la revendication 1, dans lequel la trajectoire de scan (70) est agencée pour communiquer des mouvements de palpage identifiables (76a, 76b) avant et après le premier segment de trajectoire de scan (78).

3. Un procédé selon l'une quelconque des revendications précédentes, dans lequel la pluralité de mouvements de palpage identifiables (76) permet d'identifier un début et une fin du premier segment de trajectoire de scan (78).

4. Un procédé selon l'une quelconque des revendications précédentes, dans lequel au moins l'un de la pluralité de mouvements de palpage identifiables (76) comprend la réduction, puis l'augmentation de la distance entre le palpeur de scanning (4) et l'objet (6 ; 62).

5. Un procédé selon la revendication 4, dans lequel le palpeur de scanning (4) comprend un palpeur contact comportant un stylet pouvant être fléchi (12) pour entrer en contact avec l'objet (6 ; 62) et au moins l'un de la pluralité de mouvements de palpage identifiables (76) comprend l'augmentation, puis la diminution du fléchissement du stylet.

6. Un procédé selon l'une quelconque des revendications précédentes, dans lequel au moins l'un de la pluralité de mouvements de palpage identifiables (76) comprend une période de repos dans laquelle le mouvement du palpeur de scanning par rapport à l'objet (6 ; 62) est arrêté.

7. Un procédé selon l'une quelconque des revendications précédentes, dans lequel le palpeur de scanning (4) capture des données de palpage à une vitesse de capture prédéterminée et la vitesse d'avance de l'appareil de machine-outil peut être modifiée par un opérateur de machine-outil.

8. Un procédé selon l'une quelconque des revendications précédentes, dans lequel le palpeur de scanning (4) comprend un palpeur contact comportant un stylet pouvant être fléchi pour entrer en contact avec l'objet.

9. Un procédé selon l'une quelconque des revendications précédentes, dans lequel le premier segment de trajectoire de scan (78) produit des données de palpage qui sont analysées pour déterminer une dimension de l'objet, un emplacement de l'objet et/ou une orientation de l'objet.

10. Un procédé selon l'une quelconque des revendications précédentes, dans lequel la trajectoire de scan (70) comprend une pluralité d'autres segments de trajectoire de scan qui produisent chacun des données de palpage qui peuvent être analysées pour mesurer une propriété de l'objet, dans lequel la trajectoire de scan (70) est agencée pour communiquer des mouvements de palpage identifiables avant et après chaque autre segment de trajectoire de scan pour permettre à un début et à une fin de chaque autre segment de trajectoire de scan d'être identifiés à partir des seules données de palpage.

11. Un procédé selon l'une quelconque des revendications précédentes, dans lequel l'objet (6 ; 62) comprend un composant d'un appareil électronique grand public.
